# EUROPÄISCHE PATENTSCHRIFT

(11) **EP 3 911 792 B1**
(45) Veröffentlichungstag und Bekanntmachung des Hinweises auf die Patenterteilung: **20.12.2023**
(21) Anmeldenummer: 20701535.5
(22) Anmeldetag: 09.01.2020
(51) Int. Cl.: D04H 11/08, B32B 5/02, B32B 5/06, B32B 5/18, B32B 5/24, B32B 5/26

(54) **KRAFTFAHRZEUG-BODENVERKLEIDUNG, GEPÄCKRAUMVERKLEIDUNG ODER LADEBODENVERKLEIDUNG MIT STRUKTURGENADELTER TEPPICH-OBERFLÄCHE**
COVERING FOR THE FLOOR, BOOT, TRUNK OR LOAD COMPARTMENT OF A MOTOR VEHICLE HAVING A STRUCTURALLY NEEDLE-PUNCHED CARPET SURFACE
REVÊTEMENT SOUS CAISSE, REVÊTEMENT DE COFFRE À BAGAGES OU REVÊTEMENT DE PLANCHER DE CHARGEMENT, DE VÉHICULE À MOTEUR, AVEC UNE SURFACE TAPIS DE STRUCTURE AIGUILLETÉE

(30) Priorität: 15.01.2019 DE 102019100922
(43) Veröffentlichungstag der Anmeldung: 24.11.2021
(73) Patentinhaber: Adler Pelzer Holding GmbH, 58099 Hagen (DE)
(72) Erfinder: FALK, Frank, 72459 Albstadt (DE); SCHULZE, Volkmar, 84069 Schierling (DE); DICKERT, Matthias, 58454 Witten (DE); SINGH, Ray, 58332 Schwelm (DE)
(74) Vertreter: Hannke Bittner & Partner mbB Regensburg
(86) Internationale Anmeldenummer: PCT/EP2020/050386
(87) Internationale Veröffentlichungsnummer: WO 2020/148150

(56) Entgegenhaltungen:
- EP-A1- 2 050 850
- WO-A1-2011/045691
- WO-A1-2018/210852
- AT-B- 414 331
- DE-A1- 3 904 526
- DE-B3-102018 101 321

## Beschreibung

Gegenstand der Erfindung ist ein Verfahren zur Herstellung einer dreidimensional geformten Bodenverkleidung, Gepäckraumverkleidung oder Ladebodenverkleidung für Kraftfahrzeuge, deren Teppich-Oberfläche sichtseitig eine genadelte Struktur aufweist sowie die Verkleidungen selbst.

Das Oberflächenmaterial für ein Kraftfahrzeug selbst ist ein Velours-Teppich, der mit mehreren Unterschichten versehen sein kann sowie eine Schaum- oder Faser-/Vlies-Isolation zur Karosserie hin, haben kann.

Insbesondere durch die Entwicklung von E-Kraftfahrzeugen sucht man im Design/Styling nach alternativen Lösungen in der verformbaren Teppichoberfläche, im Vergleich zum einfarbigen, glatten Flachnadelvlies-, Velours- und Tuftingteppich.

Bei Kraftfahrzeugen mit Hecktür (Kombis) und umklappbarer Rücksitzlehne trifft dieses Styling insbesondere auch auf den Gepäckraum und den Ladeboden zu, da man bei geöffneter Hecktür und umgeklappten Rücksitzlehnen von hinten in den damit freigegebenen Innenraum des Kraftfahrzeuges schaut. Beides, Gepäck- und Fahrgastraum, müssen dann ein einheitliches, in sich stimmiges Styling verkörpern.

Im Stand der Technik sind verschiedene Ausführungen von Teppich-Oberwaren bei Kraftfahrzeug-Bodenverkleidungen, Gepäckraumverkleidungen sowie Ladebodenverkleidungen bekannt, nämlich insbesondere Tufting-, Velours- und Flachnadelvlies-Teppiche.

Bei Tufting-Teppichen wird insbesondere PA6.6, PA6, PP, rPA und PET, rPET sowie die entsprechenden bio-basierenden Polyamide (PA 5.10; PA 6.10); und bei den Velours- und Flachnadelvlies-Teppichen PET, PET/PP, PP, PA/PET und rPET vorwiegend als Garn-/Fasermaterial eingesetzt.

Im Stand der Technik sind Verfahren zur Herstellung von Velours-Teppichen bekannt, siehe unter anderem DE 44 09 771 A1, DE 29 00 935 C2 und DE 10 2008 026 968 A1.

Ein Velours-Vlies ist ein veredeltes Nadelvlies, bei dem bei einem vorgefertigten Vliesmaterial mittels Vernadelung in ein laufendes homogenes Bürstenband, ein Faserpol erzeugt wurde. Wenn dieses dann noch in einem weiteren Prozessschritt auf definierte Flor-/Polhöhe geschoren ist, spricht man von einem Schervelours.

Ein Velours-Teppich unterscheidet sich von einem Nadelvlies-Teppich durch eine hochwertigere Optik und Haptik, sowie ein verbessertes Verschleißverhalten.

Zur Homogenisierung des Einstichbildes bei einem vernadelten Vlies sind in US 9 567 698 B2, US 2016/0069006 A1, US 9 260 806 B2, US 2015/0259836 A1 und EP 2 918 719 A1 spezielle Verfahren beschrieben. Bei der Herstellung eines flachen Nadelvlieses werden Stapelfasern nach einer Vliesbildung mittels Krempel und Kreuzleger über vielfaches Vernadeln zwischen zwei Metallplatten verfestigt. In einem weiteren Arbeitsschritt mittels nochmaliger Vernadelung in ein Bürstenband, kann aus diesem flachen Nadelvlies ein Veloursnadelvlies erzeugt werden. Bei beiden Varianten ist es für eine gute Endfestigkeit notwendig, die Stapelfasen nach dem Vernadeln thermisch oder chemisch einzubinden.

Die Einbindung der Fasern erfolgt größtenteils mittels geschäumten Latex oder Acrylat. Ein kombinierter Einsatz von Latex oder Acrylat und BiCo-Faser (coPET/PET-Bikomponentenfaser) ist in praxi ebenfalls üblich. Des Weiteren wird die Einbindung auch ausschließlich über BiCo-Faser realisiert.

Speziell in WO 2017/061970 A1 wird auf das Einbinden des Teppichs mittels Bikomponenten (BiCo)-Fasern eingegangen. Hier wird die Optimierung der (BiCo-)Faserfixierung durch den Einsatz spezieller Schlitzdüsen im Trockenofen beschrieben. Daneben sind bekannt: aufgestreutes PE, EVA/PE-Gemisch, auf-extrudiertes PE, Folien, Heißkleber, thermoplastische Dispersionen und das Thermobonding (EP 1 598 476 B1).

In der DE 2 008 439 C [US 3 755 055] wird ein Verfahren beschrieben, bei dem eine einfarbige oder melangierte Vliesstoffbahn und eine mit Pigmentfarbstoffen mit einem ornamentalen Muster ein- oder mehrfarbig einseitig bedruckte Vliesstoffbahn aufeinandergelegt werden, wobei die bedruckte Seite der einen Vliesstoffbahn der unbedruckten Vliesstoffbahn abgekehrt ist, und danach beide Vliesstoffbahnen von der unbedruckten Fläche her soweit durchgenadelt werden, dass sich die Fasern der unbedruckten Vliesstoffbahn mit den Fasern der bedruckten Vliesstoffbahn unter Bildung eines Flores auf deren bedruckter Fläche vermischen und deren aufgedrucktes ornamentales Muster zu einem weichen und dreidimensional wirkenden Muster verändert wird.

Die DE 39 04 526 A1 offenbart einen Bodenbelag und ein Verfahren zu seiner Herstellung. Zur Herstellung eines Bodenbelages aus zwei Schichten aus Nadelvlies, von denen die Oberschicht an ihrer Oberseite strukturiert ist, wird die Unterschicht von der Unterseite der strukturierten Oberschicht her in diese eingenadelt. Dabei ist die Nadeltiefe wesentlich geringer als die Stärke der Oberschicht. Durch das Zusammennadeln der beiden Schichten von der Rückseite der Oberschicht her wird die Struktur dieser Oberschicht nicht zerstört. Anschließend an das Zusammennadeln erfolgt ein zusätzliches Verbinden beider Schichten durch Imprägnieren mit einem Bindemittel durch die Oberschicht hindurch.

In EP 0 888 743 A1 [US 2002/0029445 A1, US 6 287 407 B1, US 6 398 895 B1] wird ein strukturiertes Textilmaterial aus mindestens zwei verschiedenen Basisvliesen für den Bereich Reinigungstextilien beschrieben. Die technische Lehre betrifft ein strukturiertes Textilmaterial aus mindestens zwei verschiedenen vernadelten Basisvliesen, wobei die Basisvliese eine durch Nadelung von mindestens einer Seite erhaltene Struktur aufweisen, wobei die zur Strukturnadelung verwendeten Nadeln Gabel- oder Kronennadeln sind und die Tiefe der Gabeln beziehungsweise der Bärte so gewählt ist, dass sich diese beim Durchstich vollständig mit Fasern des den Nadeln zugewandten Basisvlieses füllen und wobei das Textilmaterial im Muster, im Fond und auf der Rückseite unvermischte, reine Fasern aufweist. Im Verfahren zur Herstellung des strukturierten Textilmaterials wird zum einen angeführt, dass eine Kaschierung der beiden Schmelzfasern aufweisenden vernadelten Basisvliese ohne Aktivierung der Schmelzfasern erfolgt, dass anschließend eine ein- oder zweiseitige Strukturnadelung erfolgt, und dass die Schmelzfasern der Basisvliese nach der Strukturnadelung aktiviert werden; und zum anderen, dass vor dem Einlauf in eine Strukturnadelmaschine zwischen die beiden Schmelzfasern aufweisenden vernadelten Basisvliese eine Zwischenlage aus einem eine Klebung der beiden Basisvliese vermögenden Werkstoffe, insbesondere ein Klebevlies, eingebracht wird, dass die beiden Basisvliese und die Zwischenlage miteinander einer ein- oder zweiseitigen Strukturnadelung unterworfen werden, und dass anschließend die Verbindung der beiden Basisvliese und der Zwischenlage durch Aktivierung der Schmelzfasern und der Zwischenlage hergestellt wird.

In WO 2011/045691 A1 wird ein graphischer Veloursteppich und dessen Herstellung beschrieben. Anwendung finden hierbei zwei Strukturierungsmaschinen besetzt mit jeweils 2 Nadelbrettern; und ein Basis- und einen Obervliesstoff. Das Basisvlies wird zwischen den zwei Strukturierungsmaschinen auf das Obervlies zugeführt und in der zweiten Strukturierungsmaschine zu einem Vlies vernadelt. Die Nadeln in den Nadelbrettern sind nach vorbestimmten Mustern angeordnet. Auf das Basisvlies ist ein Klebstoff aufgebracht, der dann die Fasern der Vliesschichten fixiert/einbindet.

Weiterhin ist bekannt, Muster in einer Nadelfilzbahn mittels mehrerer Komponenten, Faserschichten und mehrerer Nadelungsvorgänge zu erzeugen, siehe u.a. DE 103 46 473 A1 und WO 2011/065851 A1.

In der DE 20 2009 000 775 U1 wird ein Faserflächengebilde dargelegt, das aus einem Nadelvliesstoff bzw. Faserflor (Oberflächenschicht) auf der Sichtseite und einem Faserflor bzw. Faservlies (Musterschicht), welche durch Vernadelung mittels unterschiedlicher Nadeltypen/Nadelarten und/oder Nadelanordnungen und/oder Einstichrichtungen und/oder Einstichtiefen miteinander verbunden sind, besteht.

Die Musterschicht ist vorbearbeitet, die Musterschicht unterscheidet sich von der Oberflächenschicht in den Fasern selbst und der Faserfärbung; auch ist die Musterschicht vor dem Vernadeln mit der Oberflächenschicht ausgestanzt und/oder ausgeschnitten worden; sowie ist gefärbt und/oder bedruckt. Des Weiteren werden mehrere unterschiedliche Musterflore bzw. Mustervliese als Musterschicht eingesetzt. Die Oberflächenschicht ist rückvernadelt und oberflächenbehandelt.

WO 2018/210852 A1 offenbart ein Verfahren zur Herstellung eines dreidimensional verformbaren Velour-Teppich für z.B. eine Bodenverkleidung eines Kraftfahrzeuges aufweisend eine Grammatur von 370 g/m2. Ein strukturierter Teppich wird bei einer definierten Einstellung der Einstichtiefe aus einem Ausgangsvlies hergestellt.

Alle im Stand der Technik beschriebenen, "strukturgenadelten" Anwendungen, Verfahren und Vorrichtungen sowie Materialstrukturen betreffen nicht (einlagige) Flachnadelvlies-Teppiche für die Nutzung im Kraftfahrzeug, deren dreidimensionale Verformung zu Kraftfahrzeug-Bodenverkleidungen, Gepäckraumverkleidungen oder Ladebodenverkleidungen. Des Weiteren findet man keine Ausführungen zur Strukturierung von Velours-Oberflächen mittels Bürsten-Geometrie und/ oder Strukturierung der Bürsten. Es wird nicht von einer zerstörungsfreien Struktur berichtet, die bei einer dreidimensionalen Verformung im Kontaktheizfeld (Kaschierpresse), Strahlerheizfeld und im Verformungswerkzeug selbst ihre Oberflächenstruktur strapazierfähig behält.

Die Aufgabe der vorliegenden Erfindung gegenüber dem vorgenannten Stand der Technik ist somit die Bereitstellung eines verformungsgerechten, strukturgenadelten Teppichs, der dem Fahrgast- und/oder Gepäckraum und/oder Laderaum von Kraftfahrzeugen dahin aufwertet, dass dieser eine "Wohnzimmer-/ Wohlfühl-Atmosphäre" aufweist. Insbesondere ist es Aufgabe der Erfindung bei der Herstellung von Velours-Teppich und/ oder der Veloursisierung von Nadelvlies-Teppich ein bleibendes, strapazierfähiges Oberflächenmuster mit einer dreidimensionalen Struktur einzubringen, das über die Breite und Länge der Teppichoberfläche unterschiedlich strukturiert ist und einer dreidimensionalen Verformung zu einer Kraftfahrzeug-Boden- oder Gepäckraumverkleidung standhält.

Gegenstand der vorliegenden Erfindung ist in einer ersten Ausführungsform ein Verfahren zur Herstellung eines dreidimensional verformbaren Velours-Teppichs für eine Bodenverkleidung, eine Gepäckraumverkleidung oder eine Ladebodenverkleidung eines Kraftfahrzeuges mit strukturgenadelter, verformungsstabiler Oberfläche mit einer Grammatur des Teppichs im Bereich von 180 g/m² bis 700 g/m², das dadurch gekennzeichnet ist, dass man
bei einer definierten Einstellung der Einstichtiefe einen strukturierten Velours-Teppich aus einem Ausgangsvlies herstellt, wobei man
ein Bürstenband einsetzt, das segmentweise oder teilflächig Abschnitte unterschiedlicher Bürsten und/oder Bürstenanordnungen aufweist und diesen Velours-Teppich mit einer oder mehreren Unterschichten versieht und verformt.

Kern der vorliegenden Erfindung ist somit die Bereitstellung eines, in einem üblichen Standardverfahren hergestellten, Velours-Teppichs zur Herstellung einer Bodenverkleidung, einer Gepäckraumverkleidung oder einer Ladebodenverkleidung eines Kraftfahrzeuges mit strukturgenadelter, verformungsgerechter Sichtoberfläche allein durch die Anordnung von Bürsten des Bürstenbandes mit unterschiedlicher Bürsten-/Bürstenfaserhöhe und Bürsten-/Bürstenfaser-Struktur bei der zur Vernadelung und/oder Veloursisierung der Bodenverkleidungen, der Gepäckraumverkleidung oder der Ladebodenverkleidung eines Kraftfahrzeuges.

Die Bestückung des Bürstenbandes über die Breite und Länge erfolgt dabei mit vorab definierten Bürsten-/Bürstenfaserhöhen und/oder Bürsten-/Bürstenfaser-Strukturen, sowie Nadeltypen und/oder -geometrien, die somit eine vorabbestimmte Struktur der Velours-Oberfläche erzeugen.

Der Vorteil der vorliegenden Erfindung besteht in der Bereitstellung eines verformungsgerechten/-stabilen, strukturgenadelten Velours-Teppich für die Herstellung von Kraftfahrzeug-Boden- und Gepäckraumverkleidungen oder Ladebodenverkleidungen ohne einen zusätzlichen Arbeitsschritt bei dessen Herstellung im Vergleich zur Standard-Velours-Teppich-Produktion.

Das Verfahren der vorliegenden Erfindung ist umsetzbar -ohne zusätzliche Vliesschichten, Vernadelungsstufen, Nadelmaschinen bzw. Nadelbretter- auf "Standard"-Anlagen allein durch die Bürsten-/Bürstenfaserhöhen und Bürsten-/Bürstenfaser-Strukturen, der damit erfolgten Bestückung des Bürstenbandes über die Breite und Länge, sowie eben der Nadelgeometrie/Nadeltype.

Eine weitere Ausführungsform der vorliegenden Erfindung besteht in einem dreidimensional geformten Velours-Teppich für eine Bodenverkleidung, eine Gepäckraumverkleidung oder eine Ladebodenverkleidung eines Kraftfahrzeuges mit strukturgenadelter, verformungsstabiler Oberfläche mit einer Grammatur des Teppichs im Bereich von 180 g/m² bis 700 g/m², weiterhin umfassend eine oder mehrere Unterschichten, wobei die Sichtseite des Teppichs eine dreidimensionale strukturgenadelte, strapazierfähige Oberfläche aufweist.

Die Realisierung soll vorzugsweise zum einen bei einem einlagigen und zum anderen bei einem zweilagigen Velours-Teppich erfolgen. Bei einer zweilagigen Ausführung können hierbei zusätzlich Farbeffekte unterschiedlicher Struktur eingenadelt werden.

### Ausführungsbeispiel:

Zur Herstellung einer verformungsgerechten/-stabilen, strukturgenadelten Bodenverkleidung wurde als Ausgangsvlies ein Vorvlies aus einem Faser-Mix bestehend aus 80% handelsüblichen 13 dtex Fasern, Faserlänge 60 mm, PET-Faser und 20% handelsüblichen 6,7 dtex Fasern, Faserlänge 64 mm, PET-Faser genutzt. Das Flächengewicht betrug 480 g/m2.

Die Nadelbretter waren wie folgt, mit Gabelnadeln der Firma Groz-Beckert, bestückt:

### In Durchlaufrichtung

1. Brett Gabelnadel 15x17x32x40x63,5 V G 9077
2. Brett Gabelnadel 15x17x32x40x63,5 D G 9077 DUR

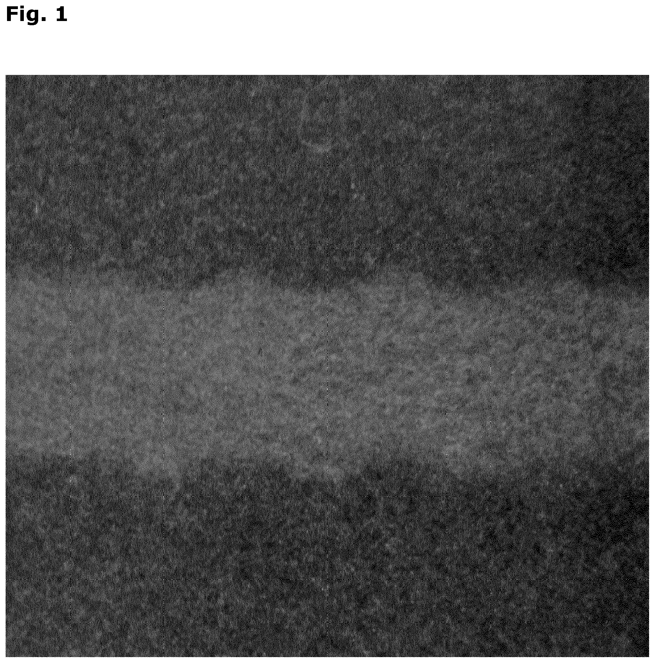

Bei dem in Fig. 1 dargestellten Velours-Teppich betrug die Einstichtiefe 6 mm und die Stichdichte 550 Stiche/cm².

Die Bürsten des Bürstenbandes hatten quer zur Durchlaufrichtung eine 4,5 mm Breite und 2 mm Tiefe, verkürzte Höhe.

Deutlich ist die Struktur der Oberfläche zu sehen.

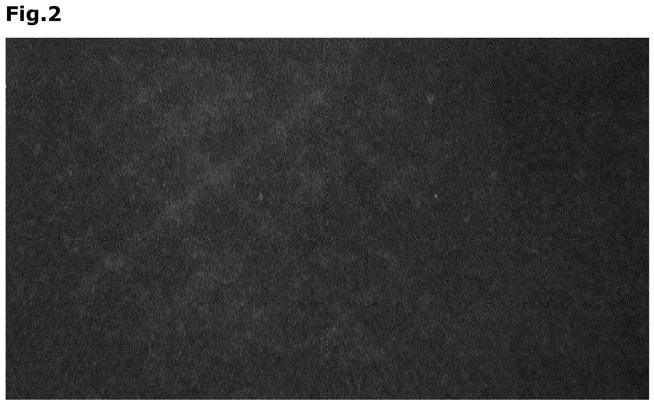

In Fig. 2 ist ein Ausschnitt eines Velours-Teppichs mit partiell strukturgenadelter Rauten-Oberfläche dargestellt; die Einstichtiefe betrug hier 4 mm und die Stichdichte 550 Stiche/cm².

## Patentansprüche

1. Verfahren zur Herstellung eines dreidimensional verformbaren Velours-Teppichs für eine Bodenverkleidung, eine Gepäckraumverkleidung oder eine Ladebodenverkleidung eines Kraftfahrzeuges mit strukturgenadelter, verformungsstabiler Oberfläche mit einer Grammatur des Teppichs im Bereich von 180 g/m² bis 700 g/m², das **dadurch gekennzeichnet ist, dass** man bei einer definierten Einstellung der Einstichtiefe einen strukturierten Velours-Teppich aus einem Ausgangsvlies herstellt, wobei man ein Bürstenband einsetzt, das segmentweise oder teilflächig Abschnitte unterschiedlicher Bürsten und/oder Bürstenanordnungen aufweist und diesen Velours-Teppich mit einer oder mehreren Unterschichten versieht und verformt.

2. Verfahren nach Anspruch 1, **dadurch gekennzeichnet,**
**dass** die Strukturierung der Borsten durch Anordnung von Bürstensegmenten, durch unterschiedliche Bürstenhöhe und/oder durch definiertes Platzieren und/oder Entfernen von Borsten im Band und / oder Teilungsstegen erfolgt.

3. Dreidimensional geformter Velours-Teppich für eine Bodenverkleidung, eine Gepäckraumverkleidung oder eine Ladebodenverkleidung eines Kraftfahrzeuges mit strukturgenadelter, verformungsstabiler Oberfläche mit einer Grammatur des Teppichs im Bereich von 180 g/m² bis 700 g/m², weiterhin umfassend eine oder mehrere Unterschichten, wobei die Sichtseite des Teppichs eine dreidimensionale, strukturgenadelte, strapazierfähige Oberfläche aufweist.

## Claims

1. A method for producing a three-dimensionally deformable velour carpet for a floor panelling, a luggage compartment panelling or a loading floor panelling of a motor vehicle with a structurally needled, deformation-resistant surface with a grammage of the carpet in the range from 180 g/m² to 700 g/m², **characterized in that** a structured velour carpet is produced from an initial nonwoven at a defined setting of the penetration depth, wherein a brush belt being used which has sections of different brushes and/or brush arrangements in segments or over part of the surface, and this velour carpet is provided with one or several underlayers and is deformed.

2. The method according to claim 1, **characterized in that** the structuring of the bristles is carried out by arrangement of brush segments, by different brush heights and/or by defined placement and/or removal of bristles in the belt and/or pitch bars.

3. Three-dimensionally shaped velour carpet for a floor panelling, a luggage compartment panelling or a loading floor panelling of a motor vehicle, having a structurally needled, deformation-resistant surface with a grammage of the carpet in the range from 180 g/m² to 700 g/m², further comprising one or several sublayers, the visible side of the carpet having a three-dimensional, structurally needled, hard-wearing surface.

## Revendications

1. Procédé de fabrication d'un tapis en velours déformable en trois dimensions pour un revêtement de sol, un revêtement de coffre à bagages ou un revêtement de sol de chargement d'un véhicule automobile avec une surface à structure aiguilletée, stable à la déformation avec un grammage du tapis dans la plage de 180 g/m² à 700 g/m² qui est **caractérisé en ce qu'**on fabrique pour un réglage défini de la profondeur de piqûre un tapis en velours structuré à partir d'un non-tissé de départ, dans lequel on utilise une bande de brosses qui présente par segment ou sur la surface partielle des sections de différentes brosses et/ou agencements de brosses et munit ce tapis en velours d'une ou plusieurs sous-couches et le déforme.

2. Procédé selon la revendication 1, **caractérisé en ce que** la structuration des poils est effectuée par agencement de segments de brosses, par hauteur de brosses différente et/ou par placement défini et/ou retrait de poils dans la bande et/ou nervures de séparation.

3. Tapis en velours formé en trois dimensions pour un revêtement de sol, un revêtement de coffre à bagages ou un revêtement de sol de chargement d'un véhicule automobile avec une surface à structure aiguilletée, stable à la déformation avec un grammage du tapis dans la plage de 180 g/m² à 700 g/m², comprenant en outre une ou plusieurs sous-couches, dans lequel le côté visible du tapis présente une surface en trois dimensions à structure aiguilletée, robuste.
